# EUROPEAN PATENT APPLICATION

(11) **EP 4 746 071 A1**
(43) Date of publication of application: **20.05.2026**
(21) Application number: 24872668.9
(22) Date of filing: 11.07.2024
(51) Int. Cl.: H01M 4/38, H01M 4/36, H01M 4/62, H01M 4/134, H01M 10/052, H01M 4/02

(54) **SILICON NEGATIVE ELECTRODE ACTIVE MATERIAL, NEGATIVE ELECTRODE, AND SECONDARY BATTERY COMPRISING SAME**

(30) Priority: 25.09.2023 KR 20230128497
(71) Applicant: Dongjin Semichem Co., Ltd., Incheon 22824 (KR)
(72) Inventor: LEE, Sung Hoon, Hwaseong-si, Gyeonggi-do 18635 (KR); KIM, Seong Do, Hwaseong-si, Gyeonggi-do 18635 (KR); KIM, Dong Ho, Hwaseong-si, Gyeonggi-do 18635 (KR); KIM, Kwang Jin, Hwaseong-si, Gyeonggi-do 18635 (KR); KIM, Tae Yoon, Hwaseong-si, Gyeonggi-do 18635 (KR)
(74) Representative: Grünecker Patent- und Rechtsanwälte PartG mbB
(86) International application number: PCT/KR2024/009969
(87) International publication number: WO 2025/070957

(57) **Abstract**

Disclosed is a silicon negative electrode active material which improves the lifespan and efficiency of a secondary battery. According to one aspect, provided is a silicon negative electrode active material comprising: silicon particles; a carbon material on the silicon particles; a conductive material; and an inorganic binder.

## Description

### Technical Field

The present disclosure relates to a silicon anode active material, and more specifically, to a silicon anode active material, an anode, and a secondary battery including the same.

### Background Art

With the growth of information technology (IT) and the electric vehicle market, technological advancements in the industry of secondary battery, a key component, have been rapidly made. A lithium secondary battery is composed of four major materials: a cathode, an anode, a separator, and an electrolyte. As the anode active material contained in the anode among these materials, graphite is currently most commonly used. However, graphite has difficulty in realizing high energy density in secondary batteries due to its low theoretical capacity (372 mAh/g, LiC₆). Therefore, active research has been conducted to solve this problem.

As potential replacements for graphite, metals that form alloys with lithium at low potentials, such as aluminum, germanium, silicon, tin, zinc, and lead, have been primarily studied. Among them, silicon has the highest theoretical capacity (3,579 mAh/g, Li₁₅Si₄) as an anode material, and not only reacts with lithium at a low potential of 0.4 V, but also has the advantages of being environmentally friendly and having abundant reserves. However, silicon has a problem in that its volume changes during lithium-ion intercalation/deintercalation, and thus capacity reduction of the secondary battery occurs due to breakage of silicon particles and detachment from the current collector.

### DISCLOSURE

### Technical Problem

An object of the present disclosure is to provide a silicon anode active material whose volume change may be minimized.

Another object of the present disclosure is to provide a silicon anode active material capable of minimizing capacity reduction of a battery due to charge/discharge cycles.

Still another object of the present disclosure is to provide a silicon anode active material that improves the capacity and lifespan of a secondary battery.

Yet another object of the present disclosure is to provide a silicon anode active material that may effectively prevent breakage of particles during an electrode rolling process.

Still yet another object of the present disclosure is to provide a cost-effective method for producing a silicon anode active material.

A further object of the present disclosure is to provide an anode including a silicon anode active material.

Another further object of the present disclosure is to provide a secondary battery with improved lifespan and efficiency.

The objects of the present disclosure are not limited to the above-mentioned objects, and other objects and advantages of the present disclosure not mentioned may be understood from the following description and will be more clearly understood from embodiments of the present disclosure. In addition, it will be readily apparent that the objects and advantages of the present disclosure may be realized by the means and combinations thereof set forth in the claims.

### Technical Solution

According to a first aspect of the present disclosure for achieving the above objects, there is provided a silicon anode active material comprising: silicon particles; a carbon material on the silicon particles; a conductive material; and an inorganic binder.

According to a second aspect of the present disclosure, in the first aspect, the average particle diameter of the silicon particles may be 800 nm or less.

According to a third aspect of the present disclosure, in the first or second aspect, the average particle diameter of the inorganic binder may be 20 to 100 nm.

According to a fourth aspect of the present disclosure, in any one of the first to third aspects, the surface of the silicon particle may be partially or completely coated with the carbon material.

According to a fifth aspect of the present disclosure, in any one of the first to fourth aspects, the conductive material may comprise at least any one of graphene and carbon nanotubes.

According to a sixth aspect of the present disclosure, in any one of the first to fifth aspects, the inorganic binder may comprise a ceramic composition. Here, the ceramic composition may be a vitrified product of two or more types of metal oxide particles.

According to a seventh aspect of the present disclosure, in a sixth aspect, the crystallization temperature (T_{c}) of the ceramic composition may be 300 to 800°C.

According to an eighth aspect of the present disclosure, in any one of the first to seventh aspects, the weight ratio between the silicon particles and the inorganic binder may be 1:0.05 to 1:0.2.

According to a ninth aspect of the present disclosure, in any one of the first to eighth aspects, the particle size ratio between the silicon particles and the inorganic binder may be 1:0.1 to 1:1.10.

According to a tenth aspect of the present disclosure, in any one of the first to ninth aspects, the silicon anode active material may be hollow.

According to an eleventh aspect of the present disclosure, in any one of the first to tenth aspects, the silicon anode active material comprises a hollow region defined by at least any one of the silicon particles and the carbon material.

According to a twelfth aspect of the present disclosure, in the eleventh aspect, the diameter of the hollow region may be 1 to 30 µm.

According to a thirteenth aspect of the present disclosure, there is provided an anode comprising the silicon anode active material according to any one of the first to twelfth aspects.

According to a fourteenth aspect of the present disclosure, there is provided a secondary battery comprising: the anode according to the thirteenth aspect; a cathode; a separator interposed between the anode and the cathode; and an electrolyte.

The above-described solution to the problem does not enumerate all the features of the present disclosure. Various features of the present disclosure and the resulting advantages and effects may be understood in more detail by referring to the following detailed description.

### Advantageous Effects

According to one aspect of the present disclosure, the volume change of the entire silicon anode active material may be minimized by inducing bidirectional expansion. Accordingly, when the silicon anode active material is applied to a secondary battery, the capacity reduction of the battery with the progress of charge/discharge cycles may be minimized and at the same time, the long-term cycle stability of the secondary battery may be achieved.

In addition to the effects described above, specific effects of the present disclosure will be described below together with the specific contents for carrying out the present disclosure. In addition, the effects of the present disclosure are not limited to the effects mentioned above and may be easily achieved by the means and combinations thereof described in the specification.

### Brief Description of Drawings

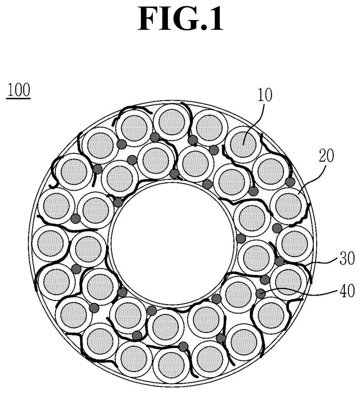

Fig. 1 is a schematic view of a silicon anode active material according to one embodiment of the present disclosure.

### Best Mode

In the present specification, singular expressions include plural expressions unless the context clearly indicates otherwise.

When multiple embodiments are described in the present specification, the effects of the present disclosure may be defined as including not only the effect resulting from each embodiment itself, but also the effect resulting from the organic combination of embodiments. For example, even if Embodiments 1 and 2 are described independently in the present specification, the effects of the present disclosure may include effects resulting from the organic combination of Embodiments 1 and 2, unless the context clearly indicates otherwise.

In the present specification, the range of numerical values expressed using the term "to" denotes a range of numerical values that includes numerical values described before and after the term "to" as a lower limit value and an upper limit value. When a plurality of numerical values as the upper and lower limits of an arbitrary numerical range are disclosed, the numerical range disclosed in the present specification may be understood as a range of arbitrary numerical values including any one value among the plurality of lower limit values and any one value among the plurality of upper limit values as a lower limit value and an upper limit value, respectively. For example, if "a to b" or "c to d" is described in the specification, it may be understood that "a to b", "a to d", "c to d", or "c to b" is described.

In the present specification, terms such as "about" or "substantially" mean a reasonable amount of deviation of the modified term such that the end result is not significantly changed. These terms may be construed as including a deviation of at least ±5% or at least ±10% of the modified term if this deviation would not negate the meaning of the word it modifies.

In the present specification, "average particle diameter" may be defined as the particle diameter (D₅₀) when the cumulative percentage in a volume-based particle size distribution curve measured by a laser diffraction particle size distribution analyzer is 50%.

According to one aspect of the present disclosure, there is provided a silicon anode active material including: silicon particles; a carbon material on the silicon particles; a conductive material; and an inorganic binder. Conventional general silicon has a problem in that its volume changes during lithium-ion intercalation/deintercalation, and thus capacity reduction of the secondary battery occurs due to breakage of silicon particles and detachment from the current collector. According to one aspect of the present disclosure, as the silicon particles, the carbon material, the conductive material and the inorganic binder are organically combined together, the volume change of the entire silicon anode active material may be minimized by inducing bidirectional expansion. Accordingly, when the silicon anode active material is applied to a secondary battery, capacity reduction with the progress of charge/discharge cycles may be minimized and at the same time, long-term cycle stability may be achieved.

Fig. 1 is a schematic view of a silicon anode active material according to one embodiment of the present disclosure.

Referring to FIG. 1, a silicon anode active material 100 according to the present disclosure includes silicon particles 10, a carbon material 20, a conductive material 30, and an inorganic binder 40.

Hereinafter, the configuration of the present disclosure will be described in more detail.

### 1. Silicon Anode Active Material

### Silicon Particles

The silicon particles according to the present disclosure may improve the capacity performance of a secondary battery and at the same time, may be prevented from breakage even when the volume of the particles expands as lithium ions are intercalated.

The silicon particles according to the present disclosure may be ground nanosized silicon particles, and may include at least one selected from the group consisting of Si, SiOx (0<x≤2), Si-C composites, and Si-Y alloys (wherein Y is any one element selected from the group consisting of alkali metals, alkaline earth metals, transition metals, group 13 elements, group 14 elements, and rare earth elements), and specifically, may include silicon (Si). According to one embodiment of the present disclosure, when the silicon particles are ground silicon particles, the capacity characteristics of the secondary battery may be further improved.

In some embodiments of the present disclosure, the silicon particles may be in a slurry form and have an average particle diameter of 800 nm or less, 700 nm or less, 600 nm or less, 500 nm or less, specifically 50 to 500 nm, 60 to 400 nm, 70 to 300 nm, 80 to 300 nm, or 80 to 200 nm. According to some embodiments of the present disclosure, as the average particle diameter of the silicon particles satisfies the above numerical range, the lifespan of the secondary battery may be further improved.

In some embodiments of the present disclosure, the silicon particles (primary particles) may be obtained by grinding of preliminary silicon particles (raw material powder). Specifically, the average particle diameter of the preliminary silicon particles (raw material powder) may be 10 to 100 µm, more specifically, 30 to 50 µm. According to some embodiments of the present disclosure, as the average particle diameter of the preliminary silicon particles satisfies the above numerical range, the particle diameter of the silicon particles may be controlled, so that the lifespan of the secondary battery may be further improved.

For example, the silicon particles may be obtained by grinding metallurgical grade silicon (MG-Si) particles, which are preliminary silicon particles. Specifically, the purity of the metal silicon may be 97 wt% or more.

In some embodiments of the present disclosure, the content of the silicon particles may be 50 to 80 wt%, 60 to 70 wt%, or 62 to 67 wt%, based on the total weight of the silicon anode active material. According to some embodiments of the present disclosure, as the content of the silicon particles satisfies the above numerical range, volume expansion due to lithium-ion intercalation may be minimized, thereby effectively preventing breakage of the particles.

### Carbon Material

The silicon anode active material according to the present disclosure includes a carbon material on the silicon particles. Specifically, the carbon material is obtained by transforming a carbon precursor by a sintering process, and may effectively prevent volume expansion of the silicon particles while suppressing side reactions between the silicon particles and the electrolyte. In another aspect, the carbon material according to the present disclosure may further enhance the adhesion between the silicon particles and the conductive material.

In the present specification, the term "layer" may include, when observing a region in which the layer exists, not only a case where the layer is formed throughout the region, but also a case where the layer is formed only in a portion of the region. For example, the surface of the layer may be defined as including a flat form, a non-flat form, and a combination thereof; or a continuous form, a discontinuous form, and a combination thereof. For example, when another member is composed of a layer directly on one member, the coverage of the other member on the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more. For example, even when multiple particles form a clustered structure, this structure may be defined as a "layer".

In some embodiments of the present disclosure, the surface of the silicon particle may be partially or completely coated with the carbon material. Specifically, the shape of the carbon material may not be particularly limited, and for example, the carbon material may be in the form of a layer with which the surface of the silicon particle is partially or completely coated. According to some embodiments of the present disclosure, as the surface of the silicon particle is partially or completely coated with the carbon material, volume expansion of the silicon particle may be more effectively suppressed, and the adhesion between the silicon particle and the conductive material may be further increased.

In some embodiments of the present disclosure, when the carbon material is in the form of a carbon layer, the thickness of the carbon layer may be 1 to 30 nm, 5 to 20 nm, or 10 to 15 nm. Specifically, when the thickness of the carbon layer satisfies the above numerical range, volume expansion of the silicon particles during a charge/discharge process may be effectively prevented.

In some embodiments of the present disclosure, the carbon material may be derived from a carbon precursor, specifically an amorphous carbon precursor. For example, the amorphous carbon precursor may include at least any one of monosaccharides, disaccharides, polysaccharides, petroleum-based resins, polyimide resins, furan resins, phenol resins, polyvinyl alcohol resins, cellulose resins, epoxy resins, and polystyrene resins, and specifically, may include at least any one of glucose, sucrose, galactose, fructose, lactose, starch, mannose, ribose, aldohexose, ketohexose, petroleum-based pitch, and coal-based pitch. According to some embodiments of the present disclosure, when a polysaccharide is used as the amorphous carbon precursor, the capacity of the secondary battery may be increased while improving the cycle life.

In some embodiments of the present disclosure, the content of the carbon material may be 10 to 40 wt%, 20 to 30 wt%, or 23 to 28 wt%, based on the total weight of the silicon anode active material. According to some embodiments of the present disclosure, as the content of the carbon material satisfies the above numerical range, volume expansion of the silicon particles may be more effectively prevented while side reactions between the silicon particles and the electrolyte may be suppressed.

### Conductive Materials

The conductive material according to the present disclosure may increase the conductivity of silicon particles and effectively suppress volume expansion of the silicon particles during the charging/discharging of the secondary battery.

The conductive material according to the present disclosure may include at least any one of graphene and carbon nanotubes. For example, the carbon nanotubes may include at least any one of single-walled carbon nanotubes, thin-walled carbon nanotubes, and multi-walled carbon nanotubes.

For example, the graphene is not particularly limited and may be unmodified graphene, graphene oxide, or reduced graphene. In another aspect, the graphene may be single-layer graphene or multi-layer graphene.

For example, the single-walled carbon nanotube may have a diameter of 0.4 to 3 nm and a length of 5 to 20 µm. For example, the multi-walled carbon nanotube may have an outer diameter of 3 to 40 nm and a length of 5 to 20 µm. For example, the diameter of the thin-walled carbon nanotube may be 5 to 9 nm.

In some embodiments of the present disclosure, the carbon nanotubes may be surface-modified. For example, a physical modification method or a chemical modification method may be used as a method for modifying the surface.

In some embodiments of the present disclosure, the content of the conductive material may be 0.1 to 10 wt%, 0.3 to 7 wt%, 0.5 to 3 wt%, or 1 to 2 wt%, based on the total weight of the silicon anode active material. According to some embodiments of the present disclosure, as the content of the conductive material satisfies the above numerical range, volume expansion of the silicon particles during the charging/discharging of the secondary battery may be effectively suppressed while the conductivity of the silicon particles may be further increased.

### Inorganic Binder

In the present specification, the term "inorganic binder" refers to an inorganic material that does not contain carbon, and may be a term opposed the term "organic binder". For example, the organic binder may be a polymer binder, etc.

The inorganic binder according to the present disclosure may enhance the adhesion between the silicon particles while increasing the strength of the silicon anode active material. In another aspect, the inorganic binder according to the present disclosure may suppress particle breakage during an electrode rolling process, thereby effectively preventing capacity degradation even when the number of cycles increases.

Unlike organic binders, the inorganic binder according to the present disclosure may better maintain its properties during a high-temperature calcination process, thereby further enhancing the adhesion between the silicon particles.

In some embodiments of the present disclosure, the inorganic binder may include a ceramic composition. Here, the ceramic composition may be defined as a vitrified product of two or more types of metal oxide particles. According to some embodiments of the present disclosure, as the ceramic composition is used as the inorganic binder, the strength of the silicon anode active material may be increased and at the same time, particle breakage during the electrode rolling process may be effectively inhibited, thereby further improving cycle stability. If only one type of metal oxide particle is used, a problem may arise in that it may be difficult to vitrify, and thus may not function sufficiently as an inorganic binder, so that the strength of the silicon anode active material may not be sufficiently increased.

In some embodiments of the present disclosure, the crystallization temperature (T_{c}) of the ceramic composition may be 300 to 800°C, 400 to 800°C, 500 to 800°C, 600 to 800°C, or 600 to 700°C. According to some embodiments of the present disclosure, as the crystallization temperature of the ceramic composition satisfies the above numerical range, the adhesion between the silicon particles may be enhanced while the strength of the silicon anode active material may be further increased. For example, the crystallization temperature of the ceramic composition may be analyzed using a differential thermal analysis method commonly used in the relevant technical field.

In some embodiments of the present disclosure, the content of the inorganic binder may be 3 to 20 wt%, 4 to 15 wt%, or 6 to 12 wt%, based on the total weight of the silicon anode active material. According to some embodiments of the present disclosure, as the content of the inorganic binder satisfies the above numerical range, the adhesion between the silicon particles may be enhanced and at the same time, the strength of the hollow-structured silicon anode active material may be further increased.

For example, the metal oxides are not particularly limited and may include two or more metal oxides selected from the group consisting of Al₂O₃, As₂O₃, As₂O₅, Ag₂O, B₂O₃, BaO, BeO, Bi₂O₃, CaCO₃, CaO, CeO₂, Co₃O₄, Cr₂O₃, Cs₂O, CuO, Fe₂CO₃, FeO, Ga₂O₃, GeO₂, H₃PO₄, In₂O, In₂O₃, K₂CO₃, K₂O, La₂O₃, Li₂CO₃, Li₂O, MgO, MnO₂, MoO₂, Na₂CO₃, Na₂O, Nb₂O₅, NbO₂, Nd₂O₃, NiO, P₂O₃, P₂O₃, PbO, PbO₂, Rb₂O, RuO₂, Sb₂O₃, Sb₂O₅, SeO₂, SeO₃, SiO₂, SnO₂, SrO, Ta₂O₅, TeO₂, TiO₂, V₂O₅, WO₃, Y₂O₃, ZnO, and ZrO₂. Here, when the inorganic binder is composed of two or more metal oxides, vitrification of the metal oxides may occur.

In some embodiments of the present disclosure, the average particle diameter of the inorganic binder may be 20 to 150 nm, 20 to 140 nm, 20 to 100 nm, or 20 to 50 nm. According to some embodiments of the present disclosure, when the average particle diameter of the inorganic binder satisfies the above numerical range, the capacity and cycle life performance of the secondary battery may be further improved.

For example, the shape of the inorganic binder is not particularly limited, and the inorganic binder may have a spherical shape, a rod-shape, or a randomly irregular surface. If the shape of the inorganic binder is not spherical, the average particle diameter of the inorganic binder may be defined as the particle diameter along the longitudinal direction.

### Relationship between components and characteristics of silicon anode material

In some embodiments of the present disclosure, the weight ratio between the silicon particles and the inorganic binder (silicon particles: inorganic binder) may be 1:0.05 to 1:0.2, or 1:0.09 to 1:0.19. According to some embodiments of the present disclosure, as the weight ratio between the silicon particles and the inorganic binder satisfies the above numerical range, the capacity of the secondary battery may be increased while the cycle stability may be further improved.

In some embodiments of the present disclosure, the particle size ratio between the silicon particles and the inorganic binder (silicon particles: inorganic binder) may be 1:0.1 to 1:1.10, 1:0.17 to 1:0.45, or 1:0.18 to 1:0.45. According to some embodiments of the present disclosure, as the particle size ratio between the silicon particles and the inorganic binder satisfies the above numerical range, the capacity of the secondary battery may be increased while the cycle stability may be further improved. Here, the particle size may be defined as, for example, an average particle diameter.

As illustrated in Fig. 1, in some embodiments of the present disclosure, the silicon anode active material may be hollow in the center. Specifically, when the shape of the silicon anode active material is hollow, the volume change of the entire particles may be minimized by inducing bidirectional expansion during the charging/discharging of the secondary battery. For example, the hollow silicon anode active material may be formed using a spray drying method commonly used in the relevant technical field.

Specifically, the silicon anode active material may include a hollow region defined by at least any one of the silicon particles and the carbon material. Specifically, the hollow region may be defined as a region defined by the profile of one or more silicon particles and/or the carbon material. Here, the diameter of the hollow region may be 1 to 30 µm, or 4 to 14 µm. When the diameter of the hollow region satisfies the above numerical range, the capacity of the secondary battery may be increased while the cycle stability may be further improved.

In some embodiments of the present disclosure, the ratio of the diameter of the silicon particles to the diameter of the hollow region (diameter of the silicon particles: diameter of the hollow region) may be 1:10 to 1:300. Specifically, as the ratio of the diameter of the silicon particles to the diameter of the hollow region satisfies the above numerical range, the capacity of the secondary battery may be increased while the cycle stability may be further improved. For example, the diameter of the silicon particles may be an average diameter.

### Production Method

According to another aspect of the present disclosure, there may be provided a method for producing a silicon anode active material.

According to one embodiment of the present disclosure, the method may include: a step of grinding a mixture including preliminary silicon particles and an antioxidant to obtain silicon particles in a slurry form; a step of preparing a mixture including the silicon particles and a conductive material; a step of dispersing the mixture, followed by drying through a spray dryer to obtain hollow-structured particles; and a step of sintering the hollow-structured particles, thereby finally producing a silicon anode active material. According to some embodiments of the present disclosure, as the hollow structure is formed through the process of nano-dispersing and spray-drying the slurry, it is possible to provide more economical advantages than a general hollow structure forming method of coating a template surface with silicon and then removing the template through heat treatment and acid treatment.

### 2. Anode

According to another aspect of the present disclosure, there is provided an anode including the silicon anode active material.

A method for manufacturing an anode according to the present disclosure may include: a step of preparing an anode slurry including the silicon anode active material according to some embodiments, an electrode conductive material, and an anode binder; a step of coating at least one surface of an anode current collector with the anode slurry, followed by drying to form an anode active material layer; and a step of rolling the current collector having the anode active material layer formed thereon.

The anode current collector may serve as a passage through which electrons are transferred from the outside so that an electrochemical reaction in the anode active material occurs or electrons are sent from the anode active material to the outside. For example, as the anode current collector, copper, stainless steel, nickel, titanium, calcined carbon, or stainless steel surface-treated with carbon, nickel, titanium, silver, or the like may be used. Specifically, a transition metal that adsorbs carbon well, such as copper or nickel, may be used as the current collector. For example, the thickness of the anode current collector may be 6 µm to 55 µm, but the thickness of the anode current collector is not limited thereto.

In some embodiments of the present disclosure, the step of rolling the current collector having the anode active material layer formed thereon may be performed under the condition of mixture density of 1.0 g/cc or more. When the silicon anode active material according to some embodiments of the present disclosure is used, even if the rolling process is performed under the above condition, the particles are not broken, and thus the compression resistance of the particles may be further improved. Here, the mixture density refers to the degree to which the mixture material is well pressed, and may vary depending on the pressure of the roll press and the thickness.

In some embodiments of the present disclosure, the anode slurry may further include a graphite-based active material in addition to the silicon anode active material. For example, the graphite-based active material may include at least one selected from the group consisting of artificial graphite, natural graphite, graphitized carbon fibers, and graphitized mesocarbon microbeads.

The anode binder may suppress separation between the anode active material (silicon anode active material) particles or between the anode active material layer and the current collector. A polymer commonly used in electrodes in the relevant technical field may be used as the anode binder. Non-limiting examples of the anode binder include, but are not limited to, poly(vinylidene fluoride co-hexafluoropropylene), poly(vinylidene fluoride-co-trichloroethylene), poly(methyl methacrylate), poly(ethylhexyl acrylate), poly(butyl acrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyanoethyl pullulan, cyanoethyl poly(vinyl alcohol), cyanoethyl cellulose, cyanoethyl sucrose, pullulan, and carboxylmethyl cellulose.

The electrode conductive material according to the present disclosure is not particularly limited and may be any one or a mixture of two or more conductive materials selected from the group consisting of graphite, carbon black, carbon fibers or metal fibers, metal powder, conductive whiskers, conductive metal oxides, activated carbon, and polyphenylene derivatives. More specifically, the electrode conductive material may be one or a mixture of two or more conductive materials selected from the group consisting of natural graphite, artificial graphite, super-p, acetylene black, Ketjen black, channel black, furnace black, lamp black, thermal black, Denka black, aluminum powder, nickel powder, zinc oxide, potassium titanate, and titanium oxide.

### 3. Secondary Battery

According to another aspect of the present disclosure, there is provided a secondary battery including: the anode according to some embodiments; a cathode; a separator interposed between the anode and the anode; and an electrolyte. Contents overlapping with the above description will be described briefly or omitted.

### Cathode

The cathode according to the present disclosure may include a cathode current collector and a cathode active material layer disposed on at least one surface of the cathode current collector. The cathode active material layer may include a cathode active material, a conductive material, and a cathode binder.

For example, the cathode current collector is not particularly limited as long as it has high conductivity without causing chemical changes in the battery. Specifically, as the cathode current collector, copper, stainless steel, aluminum, titanium, calcined carbon, stainless steel surface-treated with carbon, nickel, titanium, silver, or the like, an aluminum-cadmium alloy, or the like may be used. The cathode current collector may typically have a thickness of 6 to 20 µm.

For example, the cathode active material may include a lithium transition metal oxide. The lithium transition metal oxide may be, for example, at least one selected from the group consisting of Liₓ₁CoO₂ (0.5<x1<1.3), Liₓ₂NiO₂ (0.5<x2<1.3), Liₓ₃MnO₂ (0.5<x3<1.3), Liₓ₄Mn₂O₄ (0.5<x4<1.3), Liₓ₅(Niₐ₁Co_{b1}Mn_{c1})O₂ (0.5<x5<1.3, 0<a1<1, 0<b1<1, 0<c1<1, and a1+b1+c1=1), Liₓ₆Ni_{1-y1}Co_{y1}O₂ (0.5<x6<1.3, 0<y1<1), Liₓ₇Co_{1-y2}Mn_{y2}O₂(0.5<x7<1.3, and 0≤y2<1), Liₓ₈Ni_{1-y3}Mn_{y3}O₂ (0.5<x8<1.3, and 0≤y3<1), Liₓ₉(Niₐ₂Co_{b2}Mn_{c2})O₄ (0.5<x9<1.3, 0<a2<2, 0<b2<2, 0<c2<2, and a2+b2+c2=2), Liₓ₁₀Mn_{2-z1}Ni_{z1}O₄ (0.5<x10<1.3, and 0<z1<2), Liₓ₁₁Mn_{2-z2}Co_{z2}O₄ (0.5<x11<1.3, and 0<z2<2), Liₓ₁₂CoPO₄ (0.5<x12<1.3), and Liₓ₁₃FePO₄ (0.5<x13<1.3).

The conductive material used in the cathode may be the same as or different from the conductive material used in the anode.

The cathode binder may be the same as or different from the anode binder.

### Separator

The separator according to the present disclosure may be composed of a porous substrate or may include a porous substrate and a coating layer.

The porous substrate according to the present disclosure may be a porous structure having high resistance to the electrolyte and a fine pore diameter, which is capable of providing a lithium-ion migration pathway while preventing a short circuit by electrically insulating the anode from the cathode.

As a constituent material of the porous substrate, any organic or inorganic material with electrical insulation properties may be used without particular limitation. The porous substrate may include, for example, at least any one selected from the group consisting of polyolefin, polyethylene terephthalate, polybutylene terephthalate, polyacetal, polyamide, polycarbonate, polyimide, polyetheretherketone, polyethersulphone, polyphenylene oxide, polyphenylene sulfide, and polyethylene naphthalate, and specifically, may include polyolefin. Polyolefin not only has excellent applicability, but also may increase the capacity per volume by increasing the proportion of the electrode active material layer in the battery by making the separator thinner.

Specifically, the weight-average molecular weight (Mw) of the polyolefin may be 100,000 to 500,000 g/mol. If the weight-average molecular weight of the polyolefin is less than the lower limit of the above numerical range, it may be difficult to ensure sufficient mechanical properties, and if the weight-average molecular weight is more than the upper limit of the above numerical range, the shutdown function may not be implemented or forming may become difficult. Here, the shutdown function refers to a function that when the temperature of the secondary battery increases, blocks the movement of ions and prevents thermal runaway of the secondary battery, by closing the pores of the porous substrate through melting of the thermoplastic resin.

The thickness of the porous substrate may be, for example, 3 to 50 µm or 4 to 30 µm. If the thickness of the porous substrate is less than the lower limit of the above numerical range, the function of the conductive barrier may not be sufficient, and if the thickness is more than the upper limit of the above numerical range, the resistance of the separator may excessively increase.

The average diameter of the pores included in the porous substrate may be, for example, 10 to 100 nm. The pores included in the porous substrate are interconnected with each other, so that gas or liquid may pass from one side of the porous substrate to the other side.

The separator according to another embodiment of the present disclosure may include a coating layer disposed on at least one surface of the porous substrate, which may improve the mechanical strength and heat resistance of the separator for a secondary battery and increase ionic conductivity in the secondary battery.

The coating layer according to the present disclosure may include a binder polymer and inorganic particles.

The binder polymer according to the present disclosure may connect the inorganic particles with one another and stably fix them. The binder polymer used may be, for example, one or a mixture of two or more selected from the group consisting of polyvinylidene fluoride-co-hexafluoropropylene, polyvinylidene fluoride-co-trichloroethylene, polymethyl methacrylate, polyacrylonitrile, polyvinylpyrrolidone, polyvinyl acetate, poly(ethylene-co-vinyl acetate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, an acrylonitrile-styrene-butadiene copolymer, polyimide, and styrene-butadiene rubber.

According to another embodiment of the present disclosure, the weight ratio between the inorganic particles and the binder polymer (inorganic particles: binder polymer) may be 50:50 to 99:1, specifically 70:30 to 95:5. If the weight ratio between the inorganic particles and the binder polymer is less than the lower limit of the above numerical range, the effect of improving the thermal stability of the separator may deteriorate due to the increased content of the binder polymer, and the pore size and porosity may decrease due to a decrease in the voids formed between the inorganic particles, causing deterioration in the performance of the final battery, and if the weight ratio between the inorganic particles and the binder polymer is more than the upper limit of the above numerical range, the peeling resistance of the coating layer may deteriorate due to the excessively low content of the binder polymer.

The inorganic particles according to the present disclosure may contribute to improving the mechanical strength and heat resistance of the separator for a secondary battery. Specifically, the inorganic particles are not particularly limited as long as they are electrochemically stable. That is, the inorganic particles that may be used in the present disclosure are not particularly limited as long as they do not undergo oxidation and/or reduction reactions within the operating voltage range (e.g., 0 V to 5 V versus Li/Li⁺) of a secondary battery to which they are applied. For example, when inorganic particles with high dielectric constant are used as the inorganic particles, they may contribute to an increase in the degree of dissociation of an electrolyte salt (e.g., a lithium salt) in a liquid electrolyte, thereby improving the ionic conductivity of the electrolyte.

For the reasons described above, the inorganic particles may be inorganic particles having a dielectric constant of 5 or more, inorganic particles having lithium-ion transfer ability, or a mixture thereof.

The inorganic particles having a dielectric constant of 5 or more may be one or a mixture of two or more selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, where 0<x<1), Pb₁₋ₓLaₓZr_{1-y}Ti_{y}O₃ (PLZT, where 0<x<1, and 0<y<1), (1-x) Pb (Mg_{1/3}Nb_{2/3})O₃₋ₓPbTiO₃ (PMN-PT, where 0<x< 1), HfO₂, SrTiO₃, SnO₂, CeO₂, MgO, NiO, CaO, ZnO, and SiC.

The inorganic particles having lithium-ion transfer ability may be one or a mixture of two or more selected from the group consisting of lithium phosphate (Li₃PO₄), lithium titanium phosphate (LiₓTi_{y}(PO₄)₃, 0<x<2, and 0<y<3), lithium aluminum titanium phosphate (LiₓAl_{y}Ti_{z}(PO₄)₃, 0<x<2, 0<y<1, and 0<z<3), (LiAlTiP)ₓO_{y}-based glass (0<x<4, and 0<y<13), lithium lanthanum titanate (LiₓLa_{y}TiO₃, 0<x<2, and 0<y<3), lithium germanium thiophosphate (LiₓGe_{y}P_{z}S_{w}, 0<x<4, 0<y<1, 0<z<1, and 0<w<5), lithium nitride (LiₓN_{y}, 0<x<4, and 0<y<2), SiS₂-based glass (LiₓSi_{y}S_{z}, 0<x<3, 0<y<2, and 0<z<4), and P₂S₅-based glass (LiₓP_{y}S_{z}, 0<x< 3, 0<y<3, and 0<z<7).

For example, the average particle diameter (D₅₀) of the inorganic particles may be 1 nm to 10 µm, specifically 10 nm to 2 µm, more specifically 50 nm to 1 µm, for the formation of the coating layer with a uniform thickness and an appropriate porosity. The "particle diameter (D₅₀)" means the particle diameter at 50% of the particle number cumulative distribution depending on particle diameter. The particle diameter may be measured using a laser diffraction method. Specifically, the particle size distribution may be determined by dispersing powder to be measured in a dispersion medium, and then introducing the dispersion into a commercially available laser diffraction particle size analyzer (e.g., Microtrac S3500) and measuring the particle size-dependent difference in diffraction patterns when the particles pass through the laser beam.

Specifically, the thickness of the coating layer may be 0.1 to 10 µm, specifically 1 to 3 µm, more specifically 1.4 to 1.6 µm. When the thickness of the coating layer satisfies the above numerical range, the insulation properties and thermal stability of the separator may be increased and at the same time, the energy density of the battery may be improved.

### Electrolyte

The electrolyte according to the present disclosure may include a solvent and a lithium salt.

The solvent according to the present disclosure may be, for example, one or a mixture of two or more selected from the group consisting of propylene carbonate (PC), ethylene carbonate (EC), diethylene carbonate (DEC), dimethyl carbonate (DMC), dipropyl carbonate (DPC), dimethyl sulfoxide (DMSO), acetonitrile (ACN), 1,2-dimethoxyethane (DME), 1,2-diethoxyethane, tetrahydrofuran (THF), N-methylpyrrolidone (NMP), ethyl methyl carbonate (EMC), gamma-butyrolactone (GBL), fluoroethylene carbonate (FEC), methyl formate, ethyl formate, propyl formate, methyl acetate (MA), ethyl acetate (EA), N-propyl acetate, pentyl acetate, methyl propionate, ethyl propionate, and butyl propionate.

The lithium salt according to the present disclosure may include an anion such as, for example, NO₃⁻, F⁻, Cl⁻, Br⁻, I⁻, PF₆⁻, etc.

For example, the secondary battery may be a cylindrical, prismatic, or pouch-shaped secondary battery, but is not particularly limited as long as it corresponds to a charging/discharging device.

Another embodiment of the present disclosure may provide a battery module including the secondary battery as a unit cell and a battery pack including the same. The battery pack may be used, for example, as a power source for one or more medium- to large-sized devices selected from the group consisting of power tools; electric vehicles, including electric vehicles (EVs), hybrid electric vehicles (HEVs), and plug-in hybrid electric vehicles (PHEVs); and power storage systems.

Hereinafter, examples of the present disclosure will be described in detail so that a person skilled in the art to which the present disclosure pertains can easily carry out the present disclosure. However, this is merely an example, and the scope of rights of the present disclosure is not limited by the following contents.

### [Production Example 1: Production of Anode Active Material]

### Step of obtaining silicon particles:

12 parts by weight of metallurgical grade silicon (MG-Si) with an average particle diameter of 40 µm and 1 part by weight of an antioxidant (stearic acid) were added to 87 parts by weight of anhydrous ethanol and mixed. The mixture was ground in a bead mill to obtain silicon particles (180 g) with an average particle diameter of 100 nm in the form of a slurry.

### Step of preparing a mixture including the silicon particles and a conductive material:

A mixture was prepared by adding 180 g of the silicon particles, 40.3 g (0 g in Comparative Example 3) of an amorphous carbon precursor, 0.64 g of single-walled carbon nanotubes (SWCNTs), two types of metal oxides (BaO and ZnO mixed at a weight ratio of 1:0.3) having the contents shown in Table 1 below, and 3.45 g of a dispersant (polyvinylpyrrolidone; PVP) having a weight-average molecular weight of 40,000 g/mol to a solvent (H₂O) having the content shown in Table 1 below, followed by mixing.

As the amorphous carbon precursor, a disaccharide (sucrose) was used in Examples 1 to 9, a resin (cresolic resin) was used in Example 10, a monosaccharide (glucose) was used in Example 11, a disaccharide (sucrose) was used in Examples 12 to 20, sucrose was used in Comparative Examples 1 and 2, and no amorphous carbon precursor was used in Comparative Example 3.

Regarding the metal oxides, one type of metal oxide (B₂O₃) was used in Comparative Example 1, no metal oxide was used in Comparative Example 2, and the two types of metal oxides were used in Examples 1 to 20.

### Step of dispersing the mixture:

A step of dispersing the mixture using a high-pressure homogenizer under conditions of a pressure of 1,800 bar and a flow rate of 250 ml/min was performed to obtain a dispersed slurry.

### Step of drying the dispersed slurry:

The dispersed slurry was dried at 105°C using a spray dryer to obtain hollow spherical-structured particles. Here, drying using the spray dryer was performed at an inlet temperature of 180°C, an outlet temperature of 105°C, and a flow rate of 4 ml per minute.

### Step of sintering the dried hollow spherical-structured particles, thereby producing a silicon anode active material:

The hollow spherical-structured particles were sintered in a tube furnace at 900°C for 3 hours, thereby finally producing a silicon anode active material. Here, the diameter of the hollow region in the silicon anode active material was controlled to about 10 µm.

**[Table 1]**

| | Composition for producing anode active material | | | | | | |
|---|---|---|---|---|---|---|---|
| | Silicon particles (g) | Amorphous carbon precursor (g) | Conductive material (g) | Metal oxide (g) | Solvent (g) | Dispersant (g) | Remarks |
| Example 1 | 180 | 40.3 | 0.64 | 1.93 | 773.68 | 3.45 | |
| Example 2 | 180 | 40.3 | 0.64 | 4.13 | 771.48 | 3.45 | |
| Example 3 | 180 | 40.3 | 0.64 | 1.93 | 773.68 | 3.45 | |
| Example 4 | 180 | 40.3 | 0.64 | 1.93 | 773.68 | 3.45 | |
| Example 5 | 180 | 40.3 | 0.64 | 1.93 | 773.68 | 3.45 | |
| Example 6 | 180 | 40.3 | 0.64 | 1.93 | 773.68 | 3.45 | |
| Example 7 | 180 | 40.3 | 0.64 | 1.93 | 773.68 | 3.45 | |
| Example 8 | 180 | 40.3 | 0.64 | 1.93 | 773.68 | 3.45 | |
| Example 9 | 180 | 40.3 | 0.64 | 1.93 | 773.68 | 3.45 | Carbon precursor: polysaccharide |
| Example 10 | 180 | 40.3 | 0.64 | 1.93 | 773.68 | 3.45 | Carbon precursor: resin |
| Example 11 | 180 | 40.3 | 0.64 | 1.93 | 773.68 | 3.45 | Carbon precursor: monosaccharide |
| Example 12 | 180 | 40.3 | 0.64 | 1.93 | 762.95 | 3.45 | |
| Example 13 | 180 | 40.3 | 0.64 | 1.93 | 762.95 | 3.45 | |
| Example 14 | 180 | 40.3 | 0.64 | 1.93 | 762.95 | 3.45 | |
| Example 15 | 180 | 40.3 | 0.64 | 1.93 | 762.95 | 3.45 | |
| Example 16 | 180 | 40.3 | 0.64 | 1.93 | 762.95 | 3.45 | |
| Example 17 | 180 | 40.3 | 0.64 | 1.93 | 762.95 | 3.45 | |
| Example 18 | 180 | 40.3 | 0.64 | 1.93 | 762.95 | 3.45 | |
| Example 19 | 180 | 40.3 | 0.64 | 0.65 | 775.15 | 3.45 | |
| Example 20 | 180 | 40.3 | 0.64 | 4.75 | 770.46 | 3.45 | |
| Comparative Example 1 | 180 | 40.3 | 0.64 | 1.93 | 773.68 | 3.45 | One type of metal oxide was used |
| Comparative Example 2 | 180 | 40.3 | 0.64 | 0 | 764.88 | 3.45 | No metal oxide was used |
| Comparative Example 3 | 180 | 0 | 0.64 | 1.93 | 762.95 | 3.45 | No carbon precursor was used |

The silicon anode active materials according to Examples 1 to 20 and Comparative Examples 1 to 3 shown in Table 1 above may have the characteristics shown in Table 2 below. Here, the contents of the silicon particles, conductive material, carbon material, and inorganic binder (ceramic composition) shown in Table 2 below are units of wt%.

**[Table 2]**

| | Anode active material | | | | | | | | | |
|---|---|---|---|---|---|---|---|---|---|---|
| | Silicon particles (A) | Conductive material | Carbon material | Ceramic composition (B) | Tg (°C) of ceramic composition | Tc (°C) of ceramic composition | Size of silicon particles | Particle size of ceramic composition | A:B particle size ratio | A:B weight ratio |
| Example 1 | 67.00% | 2.00% | 25.00% | 6.00% | 508 | 615 | 110 nm | 50 nm | 1 : 0.45 | 1 : 0.09 |
| Example 2 | 62.70% | 1.90% | 23.40% | 12.00% | 508 | 615 | 110 nm | 50 nm | 1 : 0.45 | 1 : 0.19 |
| Example 3 | 67.00% | 2.00% | 25.00% | 6.00% | 436 | 520 | 110 nm | 50 nm | 1 : 0.45 | 1 : 0.09 |
| Example 4 | 67.00% | 2.00% | 25.00% | 6.00% | 527 | 680 | 110 nm | 50 nm | 1 : 0.45 | 1 : 0.09 |
| Example 5 | 67.00% | 2.00% | 25.00% | 6.00% | 508 | 615 | 300 nm | 50 nm | 1 : 0.17 | 1 : 0.09 |
| Example 6 | 67.00% | 2.00% | 25.00% | 6.00% | 508 | 615 | 60 nm | 50 nm | 1 : 0.83 | 1 : 0.09 |
| Example 7 | 67.00% | 2.00% | 25.00% | 6.00% | 508 | 615 | 110 nm | 100 nm | 1 : 0.91 | 1 : 0.09 |
| Example 8 | 67.00% | 2.00% | 25.00% | 6.00% | 508 | 615 | 110 nm | 20 nm | 1 : 0.18 | 1 : 0.09 |
| Example 9 | 67.00% | 2.00% | 25.00% | 6.00% | 508 | 615 | 110 nm | 50 nm | 1 : 0.45 | 1 : 0.19 |
| Example 10 | 67.00% | 2.00% | 25.00% | 6.00% | 508 | 615 | 110 nm | 50 nm | 1 : 0.45 | 1 : 0.19 |
| Example 11 | 67.00% | 2.00% | 25.00% | 6.00% | 508 | 615 | 110 nm | 50 nm | 1 : 0.45 | 1 : 0.19 |
| Example 12 | 67.00% | 2.00% | 25.00% | 6.00% | 500 | 724 | 110 nm | 50 nm | 1 : 0.45 | 1 : 0.09 |
| Example 13 | 67.00% | 2.00% | 25.00% | 6.00% | 386 | 749 | 110 nm | 50 nm | 1 : 0.45 | 1 : 0.09 |
| Example 14 | 67.00% | 2.00% | 25.00% | 6.00% | 392 | 480 | 110 nm | 50 nm | 1 : 0.45 | 1 : 0.09 |
| Example 15 | 67.00% | 2.00% | 25.00% | 6.00% | 508 | 615 | 600 nm | 50 nm | 1 : 1.08 | 1 : 0.09 |
| Example 16 | 67.00% | 2.00% | 25.00% | 6.00% | 508 | 615 | 40 nm | 50 nm | 1 : 1.25 | 1 : 0.09 |
| Example 17 | 67.00% | 2.00% | 25.00% | 6.00% | 508 | 615 | 110 nm | 140 nm | 1 : 1.27 | 1 : 0.09 |
| Example 18 | 67.00% | 2.00% | 25.00% | 6.00% | 508 | 615 | 110 nm | 10 nm | 1 : 0.09 | 1 : 0.09 |
| Example 19 | 69.79% | 2.08% | 26.04% | 2.09% | 508 | 615 | 110 nm | 50 nm | 1 : 0.45 | 1 : 0.03 |
| Example 20 | 61.61% | 1.84% | 22.99% | 13.56% | 508 | 615 | 110 nm | 50 nm | 1 : 0.45 | 1 : 0.22 |
| Comparative Example 1 | 67.00% | 2.00% | 25.00% | 6.00% | 508 | 615 | 110 nm | 50 nm | 1 : 0.45 | 1 : 0.19 |
| Comparative Example 2 | 71.30% | 2.10% | 26.60% | - | | - | 110 nm | 50 nm | | |
| Comparative Example 3 | | | X | | 508 | 615 | 110 nm | 50 nm | 1 : 0.45 | 1 : 0.09 |
| 1) Tg and Tc of ceramic composition: were analyzed using a differential thermal analyzer (DTA) from TA Instruments at a heating rate of 10°C/min. | | | | | | | | | | |

### [Test Example: Evaluation of Capacity and Lifespan Characteristics of Secondary Batteries]

### Fabrication of half-cell samples

Each silicon anode active material according to Production Example 1 above, a conductive material (super-P), and a binder (CMC:SBR = 1:1 weight ratio) were mixed together at a weight ratio of 6:2:2, and a solvent (H2O) was added thereto to control the viscosity, thereby preparing an anode slurry having a total solid content of 12.4 wt%. A current collector (copper foil) with a thickness of 10 µm was coated with the prepared anode slurry, which was then dried at 90°C for 30 minutes, adjusted to a mixture density of 1.0 g/cc using a roll press, and then dried in a vacuum oven at 20°C for 24 hours, thereby manufacturing each anode (thickness: 19 µm). Li metal was used as a counter electrode, a polyethylene separator (thickness: 80 µm) was used as a separator, and an electrolyte (1.3 mol LiPF₆, EC:EMC=3:7 (v/v) + 5% FEC) was injected, thereby fabricating a half-cell.

### Evaluation Method

The fabricated half-cell was charged at a rate of 0.2 C to a voltage of 0.01 V (vs. Li) in constant current (CC)/constant voltage (CV) and discharged at a rate of 0.2 C to a cut-off voltage of 1.5 V, thereby conducting a formation process. Subsequently, charging at 1.0 C to 0.01 V in CC/CV mode and discharging at 1.0 C to 1.0 V were repeated, and the capacity, initial Coulombic efficiency, and cycle life up to 100 cycles were measured.

**[Table 3]**

| | Capacity (mAh/g) | Initial Coulombic efficiency (ICE) [%] | 100-cycle life (%) |
|---|---|---|---|
| Example 1 | 1,311 | 75.2 | 92.3 |
| Example 2 | 1,224 | 74.8 | 94.5 |
| Example 3 | 1,228 | 75.1 | 83.6 |
| Example 4 | 1,383 | 74.9 | 80.3 |
| Example 5 | 1,338 | 75.4 | 88.1 |
| Example 6 | 1,270 | 74.3 | 91.9 |
| Example 7 | 1,268 | 74.3 | 82.6 |
| Example 8 | 1,306 | 75.6 | 92.9 |
| Example 9 | 1,320 | 74.6 | 93.6 |
| Example 10 | 1,226 | 74.3 | 94.1 |
| Example 11 | 1,397 | 75.5 | 77.1 |
| Example 12 | 1,574 | 74.9 | 71.4 |
| Example 13 | 1,868 | 74.5 | 69.8 |
| Example 14 | 1,174 | 74.3 | 70.5 |
| Example 15 | 1,389 | 76.7 | 72.6 |
| Example 16 | 1,223 | 73.6 | 73.3 |
| Example 17 | 1,168 | 72.6 | 69.4 |
| Example 18 | 1,269 | 74.9 | 83.4 |
| Example 19 | 1,332 | 75.1 | 71.1 |
| Example 20 | 1,049 | 72.5 | 94.5 |
| Comparative Example 1 | 1,148 | 69.8 | 64.2 |
| Comparative Example 2 | 1,384 | 74.8 | 68.1 |
| Comparative Example 3 | 2,353 | 58.1 | 30.5 |

Referring to Table 3 above, comparing Comparative Example 2 with Examples 1 to 10 in terms of long-term cycle stability depending on the inorganic binder, Examples 1 to 10 including the inorganic binder exhibited excellent performance compared to Comparative Example 2 not including the inorganic binder even if the number of cycles increased.

Comparing Comparative Example 1 with Examples 1 to 10 in terms of the type of metal oxide forming the inorganic binder, Examples 1 to 10, in which the inorganic binder consisted of two types of metal oxides, exhibited excellent initial Coulombic efficiency and long-term cycle life performance of the secondary battery compared to Comparative Example 1, in which the inorganic binder consisted of only one type of metal oxide. This suggests that, when the inorganic binder consists of only one type of metal oxide, the vitrification of the metal oxide is not sufficiently achieved.

Comparing Comparative Example 3 with Examples 1 to 10 in terms of long-term cycle stability depending on the amorphous carbon precursor, it can be confirmed that, as the amorphous carbon precursor was transformed into a carbon material within the silicon anode active material, it suppressed side reactions between the silicon anode active material and the electrolyte, and suppressed volume expansion of the silicon anode active material during the charge and discharge process, thereby exhibiting excellent performance even if the number of cycles increased.

Comparing Examples 15 and 16 with Example 1 in terms of cycle stability depending on the average particle size of silicon particles, it can be confirmed that, when the average size of silicon particles was 50 to 500 nm, the volume expansion of the silicon particles during lithium-ion intercalation/deintercalation was effectively suppressed, thereby exhibiting cycle stability.

Comparing Examples 19 and 20 with Example 1 in terms of simultaneously achieving the capacity and long-term cycle stability performance of the secondary battery depending on the weight ratio between the silicon particles and the inorganic binder, it can be confirmed that, when the weight ratio between the silicon particles and the inorganic binder satisfied 1:0.05 to 1:0.2, the capacity of the secondary battery was increased and at the same time, the cycle stability was improved.

Comparing Examples 17 and 18 with Example 1 in terms of the capacity and long-term cycle stability of the secondary battery depending on the particle size ratio between the silicon particles and the inorganic binder, it can be confirmed that, when the size ratio between the silicon particles and the inorganic binder satisfied 1:0.1 to 1:1.10, the capacity and long-term cycle stability of the secondary battery were further improved.

Although the preferred embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

### [Description of Reference Numerals]

| | | | |
|---|---|---|---|
| 10: | silicon particles | 20: | carbon materials |
| 30: | conductive material | 40: | inorganic binder |
| 100: | silicon anode active material | | |

## Claims

1. A silicon anode active material comprising:
silicon particles;
a carbon material on the silicon particles;
a conductive material; and
an inorganic binder.

2. The silicon anode active material according to claim 1, wherein the silicon particles have an average particle diameter of 800 nm or less.

3. The silicon anode active material according to claim 1, wherein an average particle diameter of the inorganic binder is 20 to 100 nm.

4. The silicon anode active material according to claim 1, wherein a surface of the silicon particle is partially or completely coated with the carbon material.

5. The silicon anode active material according to claim 1, wherein the conductive material comprises at least any one of graphene and carbon nanotubes.

6. The silicon anode active material according to claim 1, wherein the inorganic binder comprises a ceramic composition.

7. The silicon anode active material according to claim 6, wherein the ceramic composition is a vitrified product of two or more types of metal oxide particles.

8. The silicon anode active material according to claim 6, wherein a crystallization temperature (T_{c}) of the ceramic composition is 300 to 800°C.

9. The silicon anode active material according to claim 1, wherein a weight ratio between the silicon particles and the inorganic binder is 1:0.05 to 1:0.2.

10. The silicon anode active material according to claim 1, wherein a particle size ratio between the silicon particles and the inorganic binder is 1:0.1 to 1:1.10.

11. The silicon anode active material according to claim 1, wherein the silicon anode active material is hollow.

12. The silicon anode active material according to claim 1, wherein the silicon anode active material comprises a hollow region defined by at least any one of the silicon particles and the carbon material.

13. The silicon anode active material according to claim 12, wherein a diameter of the hollow region is 1 to 30 µm.

14. An anode comprising the silicon anode active material according to claim 1.

15. A secondary battery comprising:
the anode according to claim 14;
a cathode;
a separator interposed between the anode and the cathode; and
an electrolyte.
